# EUROPÄISCHE PATENTSCHRIFT

(11) **EP 4 051 577 B1**
(45) Veröffentlichungstag und Bekanntmachung des Hinweises auf die Patenterteilung: **20.03.2024**
(21) Anmeldenummer: 20800829.2
(22) Anmeldetag: 29.10.2020
(51) Int. Cl.: B63H 8/10, B63H 8/16

(54) **FLÜGELRIGG**
WING RIG
GRÉEMENT À VOILE

(30) Priorität: 31.10.2019 DE 102019129501; 25.08.2020 DE 102020122145
(43) Veröffentlichungstag der Anmeldung: 07.09.2022
(73) Patentinhaber: Boards & More GmbH, 4591 Molln (AT)
(72) Erfinder: WINNER, Ken, 82041 Oberhaching (DE)
(74) Vertreter: MERH-IP Matias Erny Reichl Hoffmann Patentanwälte PartG mbB
(86) Internationale Anmeldenummer: PCT/EP2020/080436
(87) Internationale Veröffentlichungsnummer: WO 2021/084024

(56) Entgegenhaltungen:
- Hocquinghem Stéphane: "Wing Surf Swing la nouvelle aile de F-One | Foil Magazine, toute l'information du foil ou hydrofoil", , 24. Juni 2019 (2019-06-24), XP055646755, Gefunden im Internet: URL:https://foil-magazine.com/wing-surf-de couvrez-une-nouvelle-dimension-du-sup-avec -la-swing-de-f-one/ [gefunden am 2019-11-26]
- Anonymous: "Kite Tube Size. Is Bigger Better?", , 30. April 2014 (2014-04-30), XP055320745, Gefunden im Internet: URL:http://switchkites.com/blogs/kite-tube -size-bigger-better/ [gefunden am 2016-11-18]

## Beschreibung

Die Erfindung betrifft ein handgestütztes Flügelrigg für windkraftgetriebene Sportarten, beispielsweise Foilsurfen, gemäß dem Oberbegriff des Patentanspruchs 1.

Flügelriggs werden beispielsweise unter dem Namen "Slingwing", "Foil Wing", "Wing Surfer" im Internet beschrieben. Es handelt sich dabei um einen Flügel, der nach Art eines Kites mit einer eine Leading Edge ausbildenden Fronttube und einer einzigen Strut ausgeführt ist, die vorzugsweise aufblasbar (inflatable) sind. An der mittigen Strut und an der Fronttube sind jeweils Halteschlaufen ausgebildet, über die der Nutzer das inflatable Flügelrigg während der Nutzung, beispielsweise beim Foilen oder beim Eisskaten oder beim Skifahren hält.

In der US 4,563,969 ist ein starres Flügelrigg gezeigt, bei dem die Leading Edge und ein Baum durch eine komplexe Rohrkonstruktion ausgebildet ist, die ein Segeltuch (Canopy) aufspannt. Die Leading Edge ist in einer Draufsicht gesehen bogenförmig gekrümmt. Der Baum ist durch eine Vielzahl von Streben an der Leading Edge abgestützt. Diese Streben sind derart ausgebildet, dass sie der Leading Edge in einer Vorderansicht, d. h., in Anströmrichtung des Flügelriggs gesehen - eine konkave Struktur verleihen, bei der die Endabschnitte (Tips) des Flügelriggs von einem mittigen Scheitel der Leading Edge aus nach oben ausgestellt sind.

Ein Nachteil dieser Lösung ist, dass durch den komplexen Aufbau des Baums und der Leading Edge das Gesamtgewicht des Flügelriggs sehr hoch ist, so dass eine Nutzung beim Wassersport nur mit entsprechenden Auftriebskörpern möglich ist. Ein weiterer Nachteil besteht darin, dass der Auf- und Abbau des Flügelriggs aufgrund der komplexen Rohrstruktur viel Zeit in Anspruch nimmt. Die harte Rohrstruktur der Leading Edge und des Baums bringt auch eine erhebliche Verletzungsgefahr des Nutzers bei einem Schleudersturz mit sich.

Ein ähnliches starres Flügelrigg ist in der WO 95/05973 A1 gezeigt. Auch bei dieser Lösung sind die Leading Edge und der Baum durch eine komplexe Rohrstruktur ausgebildet. Der Aufbau zeigt die gleichen Nachteile wie das Flügelrigg gemäß der oben diskutierten US 4,563,969.

In dem Dokument US 5,448,961 ist ein ebenes Flügelrigg mit einer geschlossenen Rahmenstruktur beschrieben - eine derartige Lösung ist für den Wassersport aufgrund des hohen Gewichts, der zeitaufwendigen Montage/Demontage und der Verletzungsgefahr ebenfalls unbrauchbar.

Dementsprechend haben sich die eingangs genannten Lösungen durchgesetzt, bei denen das Flügelrigg mit einer inflatable Strut ausgeführt ist, an der Halteschlaufen zum Halten ausgeführt sind. Diese Konzepte zeichnen sich durch ein geringes Gewicht und einen vergleichsweise hohen Auftrieb aus.

Wie erläutert, werden diese Flügelriggs von Hand geführt, wobei die Anstellung des Flügelriggs mit Bezug zum Wind stets in Abhängigkeit von der Windstärke und der Windrichtung sowie dem geplanten Manöver verändert werden muss. Je nach Anstellwinkel zur Wasseroberfläche und mit Bezug zur Hochachse des Nutzers kann sich dabei die Griffposition, insbesondere der hinteren, Trailing-Edge-seitigen Hand ändern. Die üblicherweise vorgesehenen Halteschlaufen erschweren jedoch eine derartige Änderung der Halteposition.

Der Artikel von Hocquinghem, Stéphane: "Wing Surf Swing la nouvelle aile de F-One Foil Magazine, taute l'information du foil ou hydrofoil", 24. Juni 2019, XP055646755 offenbart einen Wing mit im Anbindungsbereich an die Fronttube aufgewölbter Centerstrut. An der Centerstrut sind an verschiedenen Positionen flexible Haltegriffe befestigt.

Demgegenüber liegt der Erfindung die Aufgabe zugrunde, ein Flügelrigg mit verbesserten Handlingseigenschaften zu schaffen.

Diese Aufgabe wird durch ein Flügelrigg mit den Merkmalen des Patentanspruches 1 gelöst.

Vorteilhafte Weiterbildungen der Erfindung sind Gegenstand der Unteransprüche.

Das erfindungsgemäße handgestützte Flügelrigg ist für windkraftbetriebene Sportarten, wie beispielsweise das Foilsurfen, vorgesehen und hat eine inflatable Fronttube, von der sich eine inflatable Centerstrut weg erstreckt, an der zumindest ein Handle angeordnet ist. Die Fronttube und die Centerstrut bilden eine Tragstruktur für eine Canopy aus. Erfindungsgemäß ist die Centerstrut zur Ausbildung von zumindest einer Griffmulde abschnittsweise im Durchmesser verringert oder zurückgestuft und/oder an-/ausgestellt. Unter dem Begriff "Griffmulde" wird dabei eine Ausgestaltung der Centerstrut verstanden, durch die ein Durchgriffsbereich für die Hand des Nutzers/der Nutzerin gebildet ist, so dass der Handle nicht nach unten (zum Nutzer) hin ausgewölbt sein muss. Bei einer angestellten oder ausgestellten Centerstrut kann diese an- oder abgewinkelt ausgebildet sein.

Bei der erfindungsgemäßen Lösung ist somit der Haltebereich sozusagen in die Centerstrut integriert, wobei die Relativposition der Griffmulde im Hinblick auf die optimale Ergonomie beim Halten des Flügelriggs abgestimmt werden kann.

Bei einem Ausführungsbeispiel der Erfindung wird das Greifen erleichtert, wenn die Griffmulde von einem den Handle ausbildenden Haltesteg überstreckt ist, der vom Nutzer/der Nutzerin ergriffen werden kann, wobei durch die Griffmulde und den Haltesteg der Griffbereich ausgebildet ist. Der Haltesteg kann gerade, gekrümmt, winkelförmig, U-förmig, V-förmig oder in sonstiger ergonomisch optimierter Weise ausgeführt sein.

Das Halten des Flügelriggs ist besonders einfach, wenn mehrere Griffmulden, vorzugsweise ein oder zwei Griffmulden entlang der Längsachse der Centerstrut verteilt sind.

Dabei kann eine Leading-Edge-seitige Griffmulde eine geringere Längserstreckung als eine Trailing-Edge-seitige Griffmulde aufweisen.

Bei einem Ausführungsbeispiel der Erfindung ist jeder Griffmulde ein Haltesteg/Handle zugeordnet.

Bei einer alternativen Lösung sind beide Griffmulden von einem Haltesteg überstreckt, wobei dieser vorzugsweise im Bereich zwischen den Griffmulden abgestützt sein kann.

Erfindungsgemäß ist es vorteilhaft, wenn im Unterschied zu den eingangs beschriebenen bekannten Lösungen der Haltesteg aus einem vergleichsweise biegesteifen, torsionsfesten Material ausgeführt ist, so dass das Flügelrigg auch seitlich, etwa um die Achse der Centerstrut geschwenkt werden kann, und das zur Verschwenkung erforderliche Drehmoment über den Haltesteg auf die Tragstruktur übertragen wird. Dies ist bei den herkömmlichen Lösungen nur schwierig realisierbar, da die verwendeten Halteschlaufen flexibel sind und auch nicht biegesteif an die Centerstrut angebunden sind und somit keinerlei Übertragung von Drehmoment ermöglichen.

Bei einem bevorzugten Ausführungsbeispiel ist der Haltesteg mit einer griffoptimierten Hülle ausgeführt, die einen biege-/torsionssteifen Kern umgibt.

Die Griffmulde ist besonders gut zugänglich, wenn diese mit einem etwa trapezförmigen Querschnitt ausgeführt ist.

Das Flügelrigg ist besonders aerodynamisch und verwindungssteif ausgeführt, wenn sich die Centerstrut im Anschluss an eine Trailing-Edge-seitige Griffmulde verjüngt.

Der Haltesteg kann in die Centerstrut integriert sein. Alternativ ist es jedoch auch möglich, den Haltesteg auswechselbar an der Centerstrut zu befestigen.

Diese Griffmulde kann beispielsweise durch zwei zu einander angestellte, in die Centerstrut integrierte Strutschenkel ausgebildet sein, wobei der fronttubeseitige Strutschenkel vorzugsweise kürzer als der Trailing-Edge-seitige Strutschenkel ist.

Die Stabilität der Centerstrut lässt sich bei dieser Lösung optimieren, wenn diese im Anschluss an den vom Haltesteg oder dem Handle überstreckten Bereich mit einem größeren Durchmesser ausgebildet ist.

Bevorzugte Ausführungsbeispiele eines erfindungsgemäßen Flügelriggs werden im Folgenden anhand schematischer Zeichnungen näher erläutert. Es zeigen:
Figur 1 eine Prinzipdarstellung der Nutzung eines Flügelriggs, das zum Antreiben eines Foilboards verwendet wird;
Figur 2 eine dreidimensionale Seitenansicht eines Flügelriggs gemäß Figur 1 ;
Figur 3 eine schematisierte Draufsicht auf eine Tragstruktur des Flügelriggs gemäß den Figuren 1 und 2;
Figur 4 ein weiteres Ausführungsbeispiel eines erfindungsgemäßen Flügelriggs in einer dreidimensionalen Prinzipdarstellung;
Figur 5 eine Teildarstellung einer konkreten Ausführung des Ausführungsbeispiels gemäß Figur 4;
Figur 6 ein Detail der Darstellung gemäß Figur 5 und
Figur 7 ein weiteres Ausführungsbeispiel eines erfindungsgemäßen Flügelriggs.

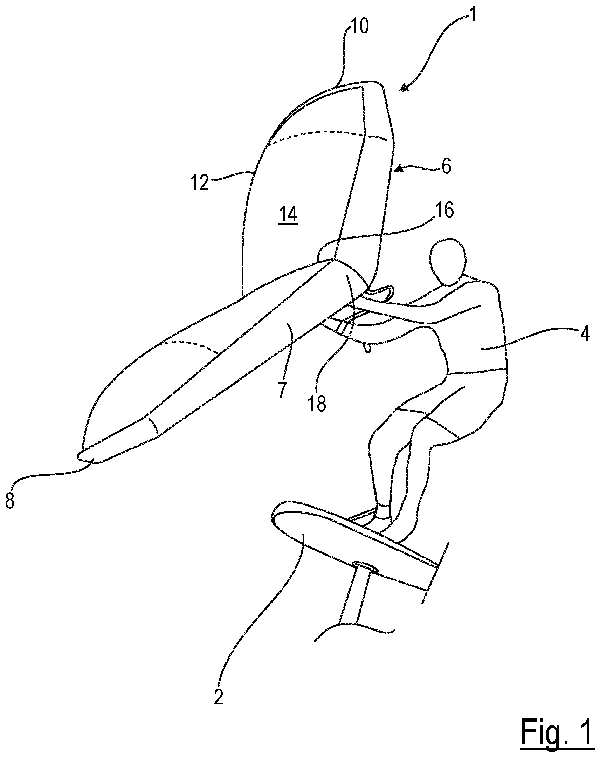

In Figur 1 ist die Nutzung eines erfindungsgemäßen Flügelriggs 1 zum Antrieb eines Foilboards 2 dargestellt. Ein Surfer 4 hält dabei das Flügelrigg 1 lediglich mit den Händen und stellt dieses mit Bezug zum Wind in Abhängigkeit von der gewünschten Fahrtrichtung (Amwind, Halbwind, Vorwind) oder vom einzustellenden Auftrieb, beispielsweise beim Springen oder beim Justieren der Fahrhöhe (Eintauchtiefe des Foils) und in Abhängigkeit von der Windstärke und dem Wellengang ein.

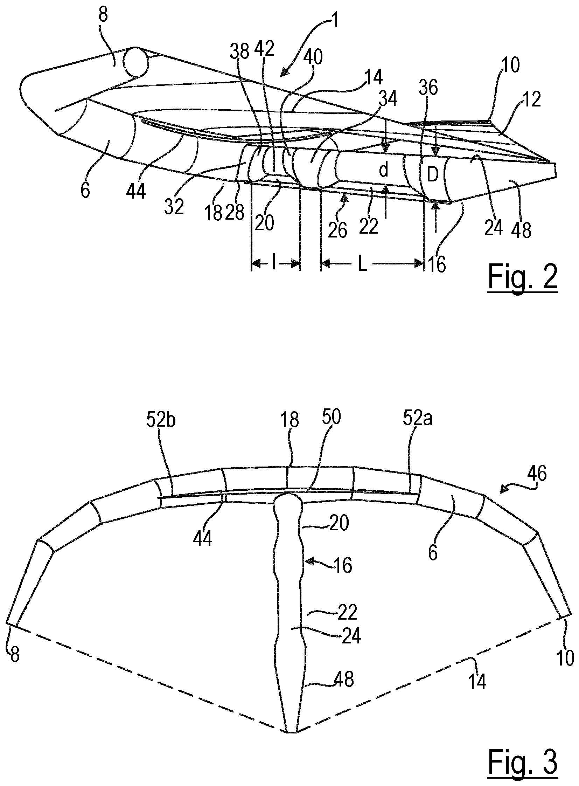

Das Flügelrigg 1 hat eine aufblasbare, eine Leading Edge 7 ausbildende Fronttube 6, die in einer Draufsicht etwa bogenförmig ausgebildet ist und sich mit Tips 8, 10 bis hin zur einer Trailing Edge 12 einer Canopy 14 des Flügelriggs 1 erstreckt. Diese ist zum einen von der Fronttube 6 und zum anderen von einer inflatable Centerstrut 16 aufgespannt, die gemeinsam eine Tragstruktur des Flügelriggs 1 ausbilden. Der Surfer hält dabei das Flügelrigg 1 lediglich an der Centerstrut 16, die sich in der Ansicht gemäß Figur 1 und gemäß Figur 2 nach unten hin auswölbt. Wie in einer älteren Anmeldung DE 10 2019 101 656.8 erläutert, auf deren Beschreibung hiermit ausdrücklich Bezug genommen wird, ist die Fronttube 6 sowohl in der Draufsicht als auch in einer Vorderansicht - gesehen in Anströmrichtung - etwa V- oder U-förmig angestellt, wobei sich das V/U in der Vorderansicht nach oben, d.h. weg vom Surfer erweitert. Wie Figur 1 entnehmbar, ist auch die Trailing Edge 12 und damit die gesamte Canopyfläche 14 in der Vorderansicht oder in einer Rückansicht V-förmig angestellt.

Figur 2 zeigt eine dreidimensionale Seitenansicht des Flügelriggs 1. Man erkennt, dass das Flügelrigg 1 in einer Draufsicht gemäß der im Folgenden beschriebenen Figur 3 etwa U-förmig ausgebildet ist und sich von einem Scheitel 18 weg hin zu den beiden Tips 8, 10 verjüngt. Im Bereich des Scheitels 18 ist die Centerstrut 16 angebunden, wobei im Anbindungsbereich nicht dargestellte Verstärkungen vorgesehen sind, um die Krafteinleitung zwischen der Centerstrut 16 und der Leading Edge (Fronttube) 6 zu optimieren.

Bei dem in Figur 2 dargestellten Ausführungsbeispiel ist die Centerstrut 16 im Durchmesser variierend ausgebildet, so dass zwei Griffmulden 20, 22 ausgebildet werden, in deren Bereich der Durchmesser d der Centerstrut 16 geringer ist als der Durchmesser D der benachbarten Strutabschnitte. Wie Figur 2 entnehmbar ist, sind diese Griffmulden 20, 22 vorzugsweise jedoch nicht entlang des gesamten Umfangs, sondern lediglich in dem von der Canopy 14 abgewandten Bereich der Centerstrut 16 ausgebildet. Ein canopyseitiger Umfangsflächenbereich 24 ist durchgängig ohne Stufe ausgebildet. Mit dem Begriff "Durchmesser" ist die Erstreckung der Centerstrut 16 in der Ansicht nach Figur 2 zu verstehen. Dabei wird kein runder Querschnitt vorausgesetzt, sondern es kann auch ein davon abweichender Querschnitt, beispielsweise ein ovaler oder verrundeter, etwa trapezförmiger Querschnitt verwendet werden.

Die in Figur 2 Leading-Edge-seitige Griffmulde 20 hat eine geringere Länge I als die Trailing-Edge-seitige Griffmulde 22, die mit einer Länge L ausgeführt ist, die zumindest das 1,5-fache, vorzugsweise mehr als das 2-fache der Länge I der vorderen Griffmulde 20 beträgt. Durch die größere Länge L wird dem Surfer 4 die Möglichkeit gegeben, die hintere, Trailing-Edge-seitige Handposition entsprechend der Anstellung des Flügelriggs 1 sehr schnell anzupassen, so dass die Durchführung der eingangs beschriebenen Manöver erleichtert ist.

Zum Halten sind bei dem dargestellten Ausführungsbeispiel die beiden Griffmulden 20, 22 von einem Haltesteg 26 überstreckt, der an dem in Figur 2 unten liegenden, von der Canopy 14 entfernten Umfangsbereich 28 befestigt ist. Bei dem dargestellten Ausführungsbeispiel überstreckt ein Haltesteg 26 beide Griffmulden 20, 22. Prinzipiell ist es auch möglich, jeder Griffmulde 20, 22 einen eigenen Haltesteg zuzuordnen.

Beim dargestellten Ausführungsbeispiel ist der Haltesteg 26 an seitlich an die Griffmulden 20, 22 angrenzenden Strutabschnitten 32, 34, 36 festgelegt. Diese Befestigung kann lösbar, beispielsweise über Pockets oder dergleichen erfolgen, die nach Art einer Lattentasche ausgeführt sind und eine biegesteife Anbindung des Haltestegs 26 ermöglichen. Dies ist besonders vorteilhaft, da dann über den torsions- und biegesteif mit der Centerstrut 16 verbundenen Haltesteg 26 auch ein Drehmoment zum Queranstellen des Flügelriggs 1 aufgebracht werden kann - wie eingangs erwähnt, ist dies mit den herkömmlichen Halteschlaufen nicht möglich.

Der Haltesteg 26 kann aus einem vergleichsweise steifen Formteil hergestellt sein. Prinzipiell ist es auch möglich, zur Verbesserung des Griffkomforts einen vergleichsweise biege- und torsionssteifen Kern mit einer grifftechnisch optimierten, vergleichsweise weichen Hülle zu umgeben. Bei einem Konzept, bei dem der Haltesteg 26 oder die Haltestege 26 auswechselbar an der Centerstrut 16 gehalten sind, kann diese Biegesteifigkeit und die Möglichkeit zur Drehmomentübertragung durch Auswechseln der Haltestege 26 angepasst werden. So kann es beispielsweise für Anfänger vorteilhaft sein, die Haltestege 26 etwas weicher auszuführen, so dass unbeabsichtigte Handbewegungen nicht direkt auf das Flügelrigg 1 übertragen werden. Erfahrene Surfer werden dann aufgrund der direkten Kraftübertragung steife Haltestege 26 bevorzugen. Durch den Haltesteg 26 wird auch die Steifigkeit der Centerstrut 16 erhöht.

Bei dem in Figur 2 dargestellten Ausführungsbeispiel sind die Griffmulden 20, 22 in der dort sichtbaren seitlichen Ansicht etwa trapezförmig ausgebildet. Dementsprechend werden die Griffmulden 20, 22 seitlich jeweils durch zwei Schrägflächen 38, 40 (lediglich bei der Griffmulde 20 mit Bezugszeichen versehen) begrenzt, über die die eigentliche Durchmesserreduzierung erfolgt und die dann in einen Steg 42 übergehen, der entsprechend der Darstellung in Figur 2 mit dem Durchmesser d ausgeführt ist. Der Querschnitt im Bereich dieses Stegs 42 ist dann entsprechend ovalisiert, wobei die Breite (senkrecht zur Zeichenebene) im Bereich des Umfangsflächenbereiches 24 größer als in den zu den Haltestegen 26 zugewandten Abschnitten ist. Die Verjüngung der Centerstrut 16 im Bereich der Griffmulde 20. 22 erfolgt somit asymmetrisch.

Wie in Figur 2 des Weiteren dargestellt, ist der sich an die Griffmulde 22 anschließende Endabschnitt 48 der Centerstrut 16 zur Trailing Edge 12 hin verjüngt.

In den Figuren 2 und 3 ist eine weitere Besonderheit eines Ausführungsbeispiels eines erfindungsgemäßen Flügelriggs 1 dargestellt. Demgemäß ist die Fronttube 6 zur Verbesserung der Biege-/Torsionssteifigkeit mit einem Versteifungselement 44 ausgeführt, dessen Funktion anhand Figur 3 erläutert wird.

Diese zeigt eine Draufsicht auf eine Tragstruktur 46, die durch die Leading Edge (Fronttube 6) und die daran angebundene Centerstrut 16 ausgebildet ist und die die gestrichelt angedeutete Canopy 14 des Flügelriggs 1 aufspannt. Bei dem in Figur 3 dargestellten Ausführungsbeispiel sind die seitlichen Bereiche der beiden Griffmulden 20, 22 dargestellt. Das im Folgenden beschriebene Versteifungselement 44 lässt sich jedoch auch bei Flügelriggs 1 verwenden, bei denen ein aus einem Rohrprofil hergestellter Baum gemäß der DE 10 2019 101 656 A1 oder eine durchgehende Centerstrut 16 ohne Griffmulden 20, 22 verwendet wird.

In der Darstellung gemäß Figur 3 ist die etwa U-förmige Krümmung der Fronttube 6 in der Draufsicht dargestellt, wobei die Centerstrut 16 an den Scheitel 18 der Fronttube 6 angesetzt ist. Das Versteifungselement 44 erstreckt sich mittig abschnittsweise etwa entlang der Längsachse der Fronttube 6. Das Versteifungselemente 44 kann dabei eine Aussteifungsstange sein, die nach Art einer Segellatte ausgeführt ist. Diese kann beispielsweise aus einem Sandwichmaterial, aus Kohlefaser, aus einem Aluminiumprofil oder dergleichen hergestellt sein.

Bei einem Ausführungsbeispiel ist vorgesehen, dieses Aussteifungselement 44 in die Außenhaut der Fronttube 6 zu integrieren. Alternativ können an dieser jedoch auch Taschen oder Halterungen ausgeführt sein, über die das Versteifungselement 44 auswechselbar an die Fronttube 6 angesetzt wird. Dabei können beispielsweise Versteifungselement 44 mit unterschiedlichen Steifigkeiten zur Verfügung gestellt werden, um eine Anpassung an unterschiedliche Wind- und Wellenbedingungen zu ermöglichen.

Bei dem dargestellten Ausführungsbeispiel erstreckt sich das Versteifungselement 44 etwa quer zur Centerstrut 16. Die Befestigung erfolgt dabei derart, dass beim Aufpumpen der Tragstruktur 46, beispielsweise über ein an der Fronttube 6 angeordnetes Ventil 62 und ein One-Pump-System, das Versteifungselement 44 mit der Tragstruktur 46 verspannt wird, so dass ein unerwünschtes Verwinden der Tragstruktur 46 bei hohen Belastungen verhindert oder zumindest verringert werden kann. Das Versteifungselement 44 kann auch entsprechend der gewünschten V-/U-Anstellung der Fronttube 6 ausgebildet sein. Auf diese Weise wird ein stabiles Flügelprofil bereitgestellt, das eine optimale Anströmung auch bei unterschiedlichen Einsatzbedingungen gewährleistet.

Das Versteifungselement 44 kann seinerseits profiliert sein, so dass beispielsweise ein mittlerer Bereich 50 mit einer größeren Biege-/Torsionssteifigkeit als Endbereiche 52a, 52b ausgeführt sind. Prinzipiell ist es auch möglich, das Versteifungselement 44 selbst etwa T-förmig auszubilden, so dass es sich auch abschnittsweise entlang der Centerstrut 16 erstreckt und somit diese - zumindest im Anbindungsbereich - aussteift.

Bei einem Ausführungsbeispiel ist die Tragstruktur 46 mit mehreren derartiger Versteifungselementen 44 ausgebildet, wobei beispielsweise gesonderte Versteifungselemente zur Profilierung der Fronttube 6 im Bereich der Tips 8, 10 vorgesehen sein können. Die Versteifungselemente 44 können - wie in den Figuren 2 und 3 dargestellt - in dem Anbindungsbereich der Centerstrut 16 oberhalb (Ansicht nach Figur 2, 3) oder aber auch unterhalb ausgebildet sein.

Die Versteifungselemente 44 können, wie oben ausgeführt, entsprechend der gewünschten U-Form der Fronttube 6 gekrümmt oder profiliert sein. Die erfindungsgemäße Verwendung derartiger Versteifungselemente 44 in der Tragstruktur 46 ermöglicht es, letztere mit einem etwas geringeren Querschnitt auszuführen, so dass trotz des geringeren Durchmessers das vorbestimmte Profil des Flügelriggs 1 auch bei böigen Bedingungen oder bei starkem Wellengang und auch während komplexer Manöver bei minimalem Gewicht beibehalten wird. Das schmale Profil verringert dabei den Strömungswiderstand des Flügelriggs 1 gegenüber herkömmlichen Lösungen erheblich, so dass die Fahreigenschaften bei minimiertem Gewicht herkömmlichen Lösungen überlegen sind.

Erfindungsgemäß ist es bevorzugt, die Versteifungselemente 44 auswechselbar an der Tragstruktur 46 zu halten, so dass das Flügelrigg 1 nach dem Ablassen der Luft und nach dem Abnehmen der Versteifungselemente 44 kompakt zusammengefaltet werden kann. Diese Auswechselbarkeit eröffnet auch die Möglichkeit, durch Weglassen oder Variieren der Versteifungselemente 44 das Profil der Tragstruktur 46 steifer oder weicher auszubilden.

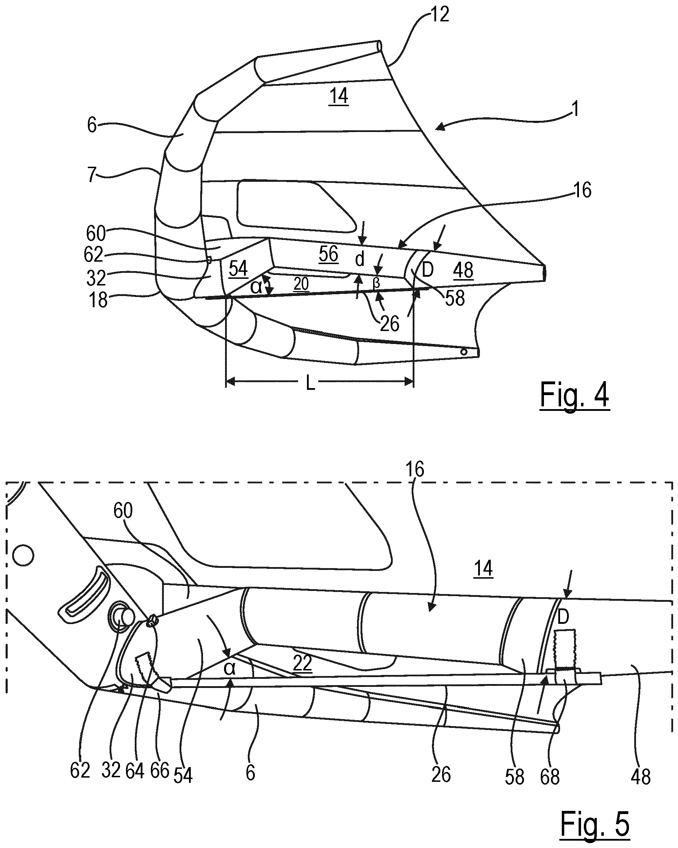

Bei dem zuvor beschriebenen Ausführungsbeispiel erstreckt sich die Achse der Centerstrut 16 im Wesentlichen geradlinig weg von der Fronttube 6 hin zur Trailing Edge 12. In Figur 4 ist ein Ausführungsbeispiel dargestellt, bei dem die Centerstrut 16 mit einem aufgewölbten/angewinkelten Bereich ausgebildet ist, durch den die Griffmulde 20, d.h. der Durchgriff oberhalb des Haltestegs 26 ausgebildet ist. Die Geometrie der Fronttube 6 entspricht im Wesentlichen dem vorbeschriebenen Ausführungsbeispiel. Die Anbindung der Centerstrut 16 erfolgt ebenfalls über einen fronttubeseitigen Strutabschnitt, der im Folgenden Anbindungsabschnitt 32 genannt wird. Dieser ist im Bereich des Scheitels 18 an die Fronttube 6 angesetzt und hat gegenüber der Gesamtlänge der Centerstrut 16 eine relativ geringe Längserstreckung. Im Anschluss an diesen Anbindungsabschnitt 32 ist die Centerstrut 16 mit einem Strutschenkel 54 ausgeführt, der um einen vorbestimmten Winkel α zur eigentlichen Centerstrutachse, die parallel zur Längsachse des Haltestegs 26 verläuft, angestellt ist. Dieser Anstellwinkel α ist so gewählt, dass die sich aufgrund der Anstellung ergebende Griffmulde 20 eine hinreichende, zum sicheren Ergreifen ausgebildete lichte Höhe (bezogen auf den Abstand des Haltestegs 26 zur Canopy 14) erreicht. Die Länge des Strutschenkels 54 ist dabei wesentlich kürzer als die Länge L der Griffmulde 20 bzw. des Wirkbereiches der Haltestegs 26. Benachbart zum Strutschenkel 54 ist ein weiterer Strutschenkel 56 ausgebildet, der sich vom Anbindungsbereich an den Strutschenkel 54 wieder zurück, hin zum Haltesteg 26 erstreckt. Dabei ist ein Anstellwinkel β des Strutschenkels 56 mit Bezug zum Haltesteg 26 geringer als der Anstellwinkel α des Strutschenkels 54. Dementsprechend ist auch die Länge des Strutschenkels 56 größer als diejenige des Strutschenkels 54. Die beiden Strutschenkel 54, 56 haben etwa einen Durchmesser d. Im Übergangsbereich zu dem sich verjüngenden Endabschnitt 48 der Centerstrut 16 ist der Durchmesser konisch auf das Maß D vergrößert. Wie aus der Darstellung gemäß Figur 4 hervorgeht, ist der Haltesteg 26 einerseits in diesem Bereich an den Endabschnitt 48 und andererseits an den Anbindungsabschnitt 32 bzw. die Fronttube 6 angesetzt. Wie erläutert, verjüngt sich die Centerstrut 16 von dem Anbindungsbereich an den Strutschenkel 56 hin zur Trailing Edge 12, so dass das Abströmen des Fahrtwindes nicht behindert ist.

Die Strutschenkel 54, 56, der konische Übergangsbereich 58 und das diesem zugewandte Ende des Endabschnittes 48 begrenzen somit die Griffmulde 20 nach oben hin nach Art eines schiefwinkligen Trapezes, dessen Basis durch den Haltesteg 26 gebildet ist. Die Länge L dieser Griffmulde 20 reicht dabei aus, um das Flügelrigg 1 bei allen erforderlichen Manövern mit höchster Präzision und Führung zu ergreifen, wobei die Griffposition frei variabel ist und nicht abhängig ist von der Positionierung von Schlaufen oder dergleichen, wie dies beim Stand der Technik der Fall ist. Ein weiterer Vorteil des erfindungsgemäßen Konzeptes besteht darin, dass die Aerodynamik nicht durch zusätzliche, nach unten auskragende Handles verschlechtert wird, da beim erfindungsgemäßen Flügelrigg 1 der Haltesteg 26 praktisch in die Centerstrut 16 integriert ist.

Die Canopy 14 ist beim dargestellten Ausführungsbeispiel entlang des Strutschenkels 56, des konischen Übergangsbereiches 58 und des Endabschnittes 48 an der Centerstrut 16 befestigt. Der Abstand zwischen der Canopy 14 und dem Strutschenkel 54 und dem Anbindungsabschnitt 32 wird beim dargestellten Ausführungsbeispiel über ein Tuch 60 oder einen Anbindungssteg ausgefüllt, so dass auch das Canopyprofil stabilisiert ist.

In Figur 4 ist ein Ventil 62 dargestellt, über das die Fronttube 6 aufgepumpt werden kann. Dabei kann das Flügelrigg 1 mit einem One-Pump-System ausgeführt sein, über das auch die Centerstrut 16 aufblasbar ist.

Figur 5 zeigt eine Teildarstellung eines konkreten Ausführungsbeispiels, bei dem zusätzlich zu dem Ventil 62 der Fronttube 6 ein weiteres Füllventil 64 vorgesehen ist, das nach Art eines Rückschlagventils ausgebildet ist und das es ermöglicht, die Centerstrut 16 unabhängig von der Fronttube 6 zu befüllen, so dass beispielsweise die Centerstrut 16 zur Erhöhung der Stabilität mit einem höheren Fülldruck befüllt wird als die Fronttube 6. Das Ventil 62 der Fronttube 6 ist ähnlich wie bei einem Kite ausgeführt. Der Aufbau derartiger Ventile ist in der Anmeldung WO 2016/059 179 A1 erläutert.

In der Darstellung gemäß Figur 5 sieht man recht deutlich den sich in Verlängerung des Anbindungsabschnittes 32 erstreckenden, mit dem Winkel α zum Haltesteg 26 angestellten kürzeren Strutschenkel 54, der sich weg von der Fronttube 6 nach oben, zur Canopy 14 hin erstreckt. An diesen schließt sich dann der längere Strutschenkel 56 an, der sich vom Scheitel der Griffmulde 22 wieder zurück zum Haltesteg 26 erstreckt. Der konifizierte Endabschnitt 48 der Centerstrut 16 ist über den konischen Übergangsbereich 58 an den längeren Strutschenkel 56 angesetzt. Wie vorstehend erläutert, ist der Haltesteg 26 dann an den Bereich des Endabschnittes 48 mit dem Durchmesser D und an den Anbindungsabschnitt 32 bzw. die Fronttube 6 angesetzt.

Beim dargestellten Ausführungsbeispiel ist der Haltesteg 26 in demjenigen Bereich, in dem er bei der Nutzung des Flügelriggs 1 umgriffen wird, als Rundprofil ausgeführt, wobei zur Erhöhung der Griffsicherheit ein rutschfester Belag am Haltesteg 26 vorgesehen sein kann. Die Fixierung des Haltestegs 26 an der Centerstrut 16 erfolgt über geeignete Befestigungsmittel, im konkreten Fall über Befestigungslaschen 66, 68, in die der Haltesteg 26 auswechselbar angesetzt werden kann. Selbstverständlich ist auch eine andere Art der Fixierung oder eine nicht lösbare Fixierung des Haltestegs 26 realisierbar. So kann die Lagefixierung beispielsweise auch über einen Klettverschluss oder dergleichen erfolgen.

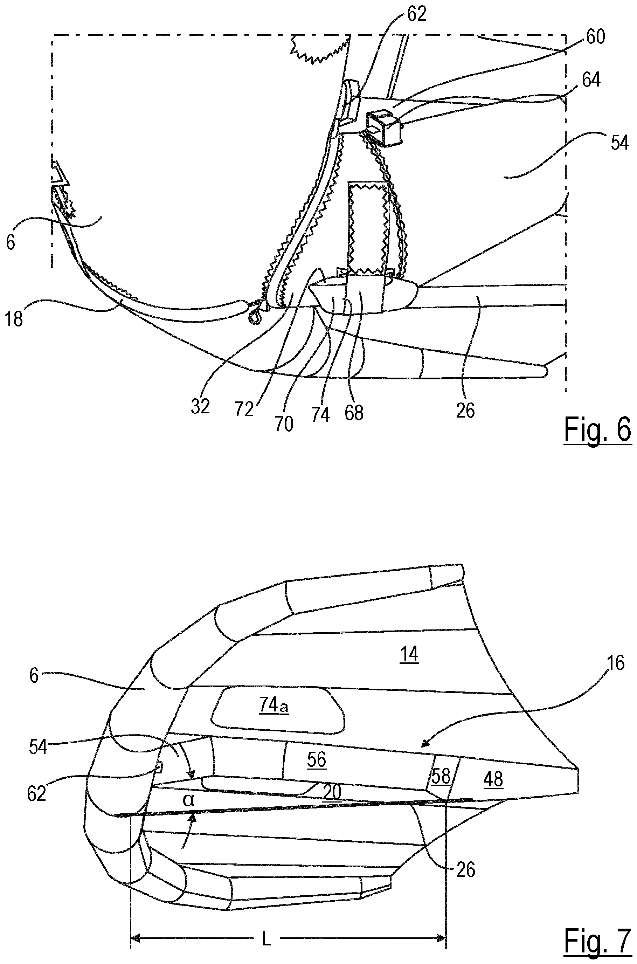

Wie aus der Detaildarstellung gemäß Figur 6 hervorgeht, die die fronttubeseitige Befestigungslasche 66 zeigt, kann der Haltesteg 26 in diesem Bereich mit einem Fixierprofil 70 ausgeführt sein, in das das Rohrprofil des Haltestegs 26 eintaucht. Zum Anbindungsabschnitt 32 der Centerstrut 16 hin ist das Fixierprofil 70 mit einer Auflagefläche 72 ausgeführt, die flächig, ohne punktuelle Belastung an dem Anbindungsabschnitt 32 anliegt. Am Außenumfang des Fixierprofils 70 ist des Weiteren eine Fixiernut 74 ausgebildet, in die ein Gurtband der Befestigungslasche 68 eintaucht, so dass ein seitliches Verrutschen (in Längsachse des Haltestegs 26) zuverlässig verhindert wird.

Prinzipiell kann dieses Fixierprofil 70 auch am Anbindungsabschnitt 32 ausgeführt sein, so dass der Haltesteg 26 dann in das Fixierprofil 70 eingesetzt wird. Bei dem in Figur 6 dargestellten Ausführungsbeispiel ist der rechte Endabschnitt des Haltestegs 26 als Rohrprofil ausgeführt, das in die Befestigungslasche 68 eingesetzt ist, so dass die Lagefixierung in Längsrichtung im Wesentlichen über das Fixierprofil 70 erfolgt. Selbstverständlich kann auch ein entsprechendes Fixierprofil an dem in Figur 5 rechten Endabschnitt des Haltestegs 26 vorgesehen werden.

Wie bereits vorstehend erläutert, kann die Centerstrut 16 in den beschriebenen Abschnitten jeweils mit einem runden Profil ausgeführt sein. Prinzipiell ist es jedoch auch möglich, dieses Profil zur Canopy 14 hin oder zum Nutzer hin zu verbreitern, so dass ein asymmetrisches Profil der Centerstrut 16 und/oder der Fronttube 6 realisiert ist. Die Canopy 14 kann direkt mit der Centerstrut 16 vernäht sein. Prinzipiell ist es jedoch auch möglich, zur Optimierung des Anströmprofils die Canopy 14 über Verbindungsstege, wie beispielsweise das Tuch 60 oder eine sonstige Stützkonstruktion mit der Centerstrut 16 zu verbinden.

Figur 7 zeigt eine Variante des Ausführungsbeispiels gemäß den Figuren 4 bis 6. Bei diesem Ausführungsbeispiel ist der erste Strutschenkel 54 gegenüber den vorbeschriebenen Ausführungsbeispielen nach oben, zur Canopy 14 hin versetzt direkt oder über einen in Figur 7 nicht sichtbaren Anbindungsabschnitt an die Fronttube 6 angesetzt. Der Strutschenkel 54 ist wie beim zuvor beschriebenen Ausführungsbeispiel zur Achse des Haltestegs 26 mit einem Anstellwinkel α angestellt. An diesen Strutschenkel 54 schließen sich dann der zweite Strutschenkel 56, der konische Übergangsbereich 58 sowie der Endabschnitt 48 der Centerstrut 16 an, so dass sich wiederum eine Griffmulde bzw. ein Durchgriffsbereich 20 nach Art eines schiefwinkligen Trapezes ergibt. Prinzipiell kann der Strutschenkel 54 direkt an die Fronttube 6 angesetzt werden, so dass der Aufbau der Centerstrut 16 etwas einfacher als beim vorbeschriebenen Ausführungsbeispiel ist.

Der Haltesteg 26 ist, wie beim zuvor beschriebenen Ausführungsbeispiel, einerseits an der Unterseite der Fronttube 6 (Ansicht nach Figur 7) bzw. etwa diametral zur Anbindung des Strutschenkels 54 und anderseits an dem Endabschnitt 48 der Centerstrut 16 befestigt.

Der Vorteil des Ausführungsbeispiels gemäß Figur 7 besteht im Wesentlichen darin, dass die lichte Weite der Griffmulde 20 und somit die Wirklänge L des Haltestegs 26 größer als bei den zuvor beschriebenen Ausführungsbeispielen ist. Ansonsten entspricht das Ausführungsbeispiel gemäß Figur 7 dem Ausführungsbeispiel gemäß den Figuren 4, 5 und 6, so dass weitere Erläuterungen entbehrlich sind.

In den Darstellungen gemäß den Figuren 4 bis 7 ist die Canopy 14 jeweils noch mit Fenstern 74a ausgeführt, die durch ein durchsichtiges Material ausgeführt sind und die es dem Nutzer ermöglichen, auf Kollisionskurs befindliche Wasserfahrzeuge oder sonstige Hindernisse zu erkennen.

Offenbart ist ein handgestütztes Flügelrigg, bei dem eine Centerstrut mit Griffmulden ausgeführt ist.

### Bezugszeichenliste:

- 1: Flügelrigg
- 2: Foilboard
- 4: Surfer
- 6: Fronttube
- 7: Leading edge
- 8: Tip
- 10: Tip
- 12: Trailing Edge
- 14: Canopy
- 16: Centerstrut
- 18: Scheitel
- 20: Griffmulde
- 22: Griffmulde
- 24: Umfangsflächenbereich
- 26: Haltesteg
- 28: Umfangsbereich
- 32: Strutabschnitt/Anbindungsabschnitt
- 34: Strutabschnitt
- 36: Strutabschnitt
- 38: Seitenfläche
- 40: Seitenfläche
- 42: Steg
- 44: Versteifungselement/Aussteifungsstange
- 46: Tragstruktur
- 48: Endabschnitt
- 50: mittlerer Bereich
- 52: Endbereich
- 54: Strutschenkel
- 56: Strutschenkel
- 58: konischer Übergangsbereich
- 60: Tuch
- 62: Ventil
- 64: Füllventil
- 66: Befestigungslasche
- 68: Befestigungslasche
- 70: Fixierprofil
- 72: Auflagefläche
- 74: Fixiernut
- 74a: Fenster

## Patentansprüche

1. Handgestütztes Flügelrigg für windkraftbetriebene Sportarten mit einer aufblasbaren Fronttube (6), von der sich eine aufblasbare Centerstrut (16) erstreckt, wobei die Fronttube (6) und die Centerstrut (16) ein Segeltuch (14) aufspannen, und an der Centerstrut (16) zumindest ein Handgriff befestigbar ist, **dadurch gekennzeichnet, dass** die Centerstrut (16) zur Ausbildung von zumindest einer Griffmulde (20, 22) mit einem Durchgriffsbereich für die Hand des Nutzers, die vom Nutzer aus gesehen oberhalb des befestigten Handgriffes gebildet ist, abschnittsweise im Durchmesser (d, D) verringert, und/oder zurückgestuft und/oder an-/ausgestellt ist.

2. Flügelrigg nach Patentanspruch 1, wobei die Griffmulde (20, 22) von einem den Handle ausbildenden Haltesteg (26) überstreckt ist.

3. Flügelrigg nach Patentanspruch 1 oder 2, wobei mehrere Griffmulden (20, 22) entlang der Längsachse der Centerstrut (16) vorgesehen sind.

4. Flügelrigg nach Patentanspruch 3, wobei eine fronttubeseitige Griffmulde (20) eine geringere Längserstreckung (I) als eine Trailing-Edge-seitige Griffmulde (22) hat.

5. Flügelrigg nach Patentanspruch 3 oder 4, wobei ein Haltesteg (26) mehrere Griffmulden (20, 22) überstreckt oder jeder Griffmulde (20, 22) ein Haltesteg (26) zugeordnet ist.

6. Flügelrigg nach einem der Patentansprüche 2 bis 5, wobei der Haltesteg (26) aus einem biegesteifen Material ausgeführt ist.

7. Flügelrigg nach einem der vorhergehenden Patentansprüche, wobei die Centerstrut (16) im Anschluss an eine Griffmulde (22) zur Trailing Edge (12) hin verjüngt ist.

8. Flügelrigg nach einem der Patentansprüche 2 bis 7, wobei der Haltesteg (26) im Wesentlichen verdrehsicher und/oder torsionsfest an der Centerstrut (16) oder der Fronttube (6) gehalten ist.

9. Flügelrigg nach einem der Patentansprüche 2 bis 8, wobei der zumindest eine Haltesteg (26) auswechselbar an der Centerstrut (16) gehalten ist.

10. Flügelrigg nach einem der vorhergehenden Patentansprüche, wobei die Centerstrut (16) in einem zur Fronttube (6) benachbarten Bereich zum Segeltuch (14) hin aufgewölbt ist.

11. Flügelrigg nach Patentanspruch 10, wobei die Aufwölbung durch zwei zu einander angestellte Strutschenkel (54, 56) gebildet ist, wobei der fronttubeseitige Strutschenkel (54) kürzer als der Trailing-Edge-seitige Strutschenkel (56) ist.

12. Flügelrigg nach Patentanspruch 10 oder 11, wobei die Centerstrut (16) im Anschluss an eine Aufwölbung einen vergrößerten Durchmesser (D) hat.

## Claims

1. A hand-supported wing rig for wind-powered sports with an inflatable front tube (6), from which an inflatable center strut (16) extends, wherein the front tube (6) and the center strut (16) span a sail cloth (14), and at least one handle can be fastened to the center strut (16), **characterised in that** the center strut (16) is reduced in diameter (d, D) in sections and/or stepped back and/or turned on/off in order to form at least one grip recess (20, 22) with a reach-through region for the user's hand, which is formed above the fastened handle as seen by the user.

2. The wing rig according to claim 1, wherein the grip recess (20, 22) is extended by a holding web (26) forming the handle.

3. The wing rig according to claim 1 or 2, wherein a plurality of grip recesses (20, 22) are provided along the longitudinal axis of the center strut (16).

4. The wing rig according to claim 3, wherein a front-tube-side grip recess (20) has a smaller longitudinal extension (I) than a trailing-edge-side grip recess (22).

5. The wing rig according to claim 3 or 4, wherein a holding web (26) extends over a plurality of grip recesses (20, 22) or a holding web (26) is assigned to each grip recess (20, 22).

6. The wing rig according to any one of claims 2 to 5, wherein the holding web (26) is made of a flexurally rigid material.

7. The wing rig according to any one of the preceding claims, wherein the center strut (16) is tapered towards the trailing edge (12) following a grip recess (22).

8. The wing rig according to any one of claims 2 to 7, wherein the holding web (26) is held on the center strut (16) or the front tube (6) in a substantially torsion-proof and/or torsion-proof manner.

9. The wing rig according to any one of claims 2 to 8, wherein the at least one holding web (26) is replaceably held on the center strut (16).

10. The wing rig according to any one of the preceding claims, wherein the center strut (16) is arched towards the sail cloth (14) in a region adjacent to the front tube (6).

11. The wing rig according to claim 10, wherein the arching is formed by two strut legs (54, 56) turned towards one another, wherein the front-tube-side strut leg (54) is shorter than the trailing-edge-side strut leg (56).

12. The wing rig according to claim 10 or 11, wherein the center strut (16) has an enlarged diameter (D) following an arching.

## Revendications

1. Gréement à aile soutenu manuellement pour des disciplines sportives pratiquées avec la force du vent, avec un tube avant (6) gonflable à partir duquel s'étend un étai central (16) gonflable, dans lequel le tube avant (6) et l'étai central (16) tendent une toile à voile (14), et au moins un élément de prise en main peut être fixé contre l'étai central (16), **caractérisé en ce que** le diamètre (d, D) de l'étai central (16) est par endroits réduit et/ou diminué et/ou engagé/désengagé pour la formation d'au moins une poignée encastrée (20, 22) avec une zone de préhension pour la main de l'utilisateur qui, vu depuis l'utilisateur, est constituée au-dessus de l'élément de prise en main fixé.

2. Gréement à aile selon la revendication 1, dans lequel la poignée encastrée (20, 22) est surplombée en longueur par une traverse de maintien (26) formant la poignée.

3. Gréement à aile selon la revendication 1 ou 2, dans lequel plusieurs poignées encastrées (20, 22) sont prévues le long de l'axe longitudinal de l'étai central (16).

4. Gréement à aile selon la revendication 3, dans lequel une poignée encastrée (20) du côté du tube avant présente une extension longitudinale (1) moindre comparé à celle d'une poignée encastrée (22) du côté du bord de fuite.

5. Gréement à aile selon la revendication 3 ou 4, dans lequel une traverse de maintien (26) surplombe en longueur plusieurs poignées encastrées (20, 22) ou une traverse de maintien (26) est attribuée à chaque poignée encastrée (20, 22).

6. Gréement à aile selon l'une des revendications 2 à 5, dans lequel la traverse de maintien (26) est réalisée dans un matériau résistant à la flexion.

7. Gréement à aile selon l'une des revendications précédentes, dans lequel l'étai central (16) s'amincit, en allant vers le bord de fuite, dans le raccordement à une poignée encastrée (22).

8. Gréement à aile selon l'une des revendications 2 à 7, dans lequel la traverse de maintien (26) est maintenue contre l'étai central (16) ou le tube avant (6) de façon essentiellement bloquée en rotation et/ou résistante à la torsion.

9. Gréement à aile selon l'une des revendications 2 à 8, dans lequel la au moins une traverse de maintien (26) est maintenue contre l'étai central (16) de façon échangeable.

10. Gréement à aile selon l'une des revendications précédentes, dans lequel l'étai central (16) est bombé, en allant vers la toile à voile (14), dans une zone avoisinant le tube avant (6).

11. Gréement à aile selon la revendication 10, dans lequel le bombement est conçu par deux branches d'étai (54, 56) engagées l'une sur l'autre, dans lequel la branche d'étai (54) du côté du tube avant est plus courte que la branche d'étai (56) du côté du bord de fuite.

12. Gréement à aile selon la revendication 10 ou 11, dans lequel l'étai central (16) présente un diamètre (D) agrandi dans le raccordement à un bombement.
